# EUROPEAN PATENT SPECIFICATION

(11) **EP 2 568 172 B1**
(45) Date of publication and mention of the grant of the patent: **02.11.2016**
(21) Application number: 12183181.2
(22) Date of filing: 05.09.2012
(51) Int. Cl.: F04B 35/04, F04B 39/00, F04B 39/12

(54) **Reciprocating compressor**
Kolbenkompressor
Compresseur à mouvement alternatif

(30) Priority: 06.09.2011 KR 20110090322
(43) Date of publication of application: 13.03.2013
(73) Proprietor: LG ELECTRONICS INC., Youngdungpo-gu Seoul 150-721 (KR)
(72) Inventor: Kim, Donghan, Seoul (KR)
(74) Representative: Vossius & Partner Patentanwälte Rechtsanwälte mbB

(56) References cited:
- WO-A1-2008/108752
- KR-A- 20070 075 909
- US-A1- 2009 238 701
- US-A1- 2010 021 323

## Description

The present disclosure relates to a reciprocating compressor, and more particularly, to a reciprocating compressor with a gas bearing.

Generally, a reciprocating compressor serves to intake, compress, and discharge a refrigerant as a piston linearly reciprocates within a cylinder. The reciprocating compressor may be classified into a connection type reciprocating compressor or a vibration type reciprocating compressor according to the method employed to drive the piston.

In the connection type reciprocating compressor, the piston is connected to a rotating shaft associated with a rotation motor by a connection rod, which causes the piston to reciprocate within the cylinder, thereby compressing the refrigerant. On the other hand, in the vibration type reciprocating compressor, the piston is connected to a mover associated with a reciprocating motor, which vibrates the piston while the piston reciprocates within the cylinder, thereby compressing the refrigerant. The present invention relates to the vibration type reciprocating compressor, and the term "reciprocating compressor" will hereinafter refer to the vibration type reciprocating compressor.

To enhance the performance of a reciprocating compressor, a portion between the cylinder and the piston, being hermetically sealed, has to be properly lubricated. To this end, there has been conventionally known a reciprocating compressor which seals and lubricates a portion between the cylinder and the piston by supplying a lubricant such as oil between the cylinder and the piston and forming an oil film. However, the supplying of the lubricant requires an oil supply apparatus, and an oil shortage may occur depending on operation conditions, thereby degrading compressor performance. Also, the compressor size needs to be increased because a space for receiving a certain amount of oil is required, and the installation direction of the compressor is limited because the entrance of the oil supply apparatus should always be kept immersed in oil.

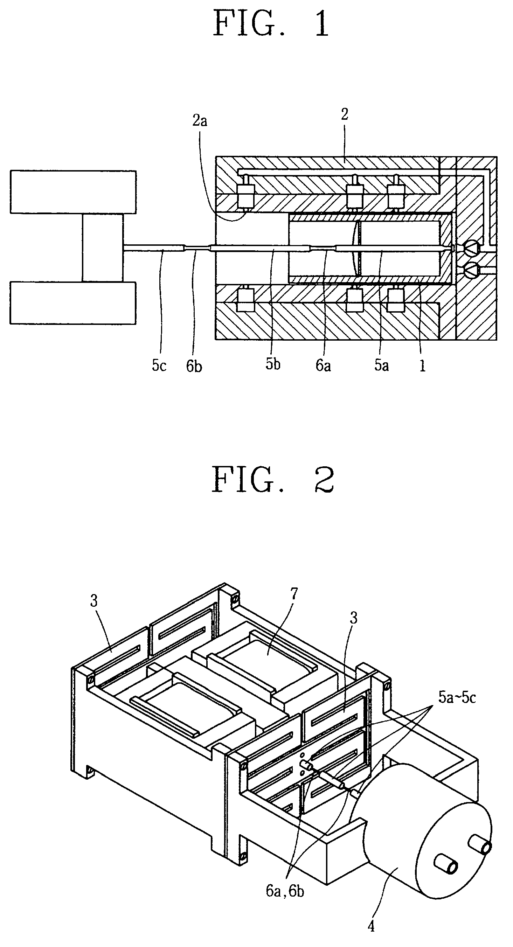

Taking into consideration the disadvantages of the oil-lubricated type reciprocating compressor, as shown in FIG. 1, there has been conventionally known a technique of forming a gas bearing between the piston 1 and the cylinder 2 by bypassing a part of compressed gas between the piston 1 and the cylinder 2. In this technique, a plurality of gas flow paths 2a with a small diameter are formed in the cylinder 2, or a sintered porous material member (not shown) is provided on an inner circumferential surface of the cylinder 2. This technique can simplify a lubrication structure of the compressor because it requires no oil supply apparatus, unlike the oil-lubricated type for supplying oil between the piston 1 and the cylinder 2, and can maintain constant compressor performance by preventing an oil shortage depending on operating conditions. Also, this technique has the advantage that the compressor can be smaller in size and the installation direction of the compressor can be freely designed because no space for receiving oil is required in the casing of the compressor.

In the case the gas bearing is applied to the reciprocating compressor, a plate spring 3 is used for a resonating motion of the piston, as shown FIG. 2.

In the case the plate spring 3 is used, the piston (shown in FIG. 1) 1 constituting a compression portion 4 and the plate spring (shown in FIG. 2) 3 are connected by a flexible connecting bar (not shown) so that the piston 1 has forward movability within the cylinder (shown in FIG. 1) 2, or the connecting bar is divided into a plurality of parts 5a to 5c and connected by at least one (preferably two or more) links 6a and 6b.

In the conventional reciprocating compressor, however, in the case of forming gas flow paths with a small diameter in the cylinder, it is difficult to form the gas flow paths as fine pores, and impurities such as iron powder produced during the operation of the compressor may block the fine gas flow paths. Then, some of the gas flow paths are blocked and a gas force cannot be uniformly applied in a circumferential direction of the piston, and hence a partial friction may occur between the cylinder and the piston. Due to this, the performance and the reliability of the compressor may be degraded, thus requiring very high cleanness.

Moreover, in the case that the exits of the gas flow paths are formed in the cylinder, suction loss occurs as the outlets of the gas flow paths are exposed to the compression space during a suction stroke to thus cause a high-pressure refrigerant to enter the compression space. On the other hand, in the case that the inlets of the gas flow paths are formed in the piston, gas from the gas bearing flows backward to the compression space as the inlets of the gas flow paths are exposed to the compression space during a suction stroke.

US 2010/0021323 A and KR 10-2007-0075909 A represent related art.

Therefore, an object of the present invention is to provide a reciprocating compressor which makes it easy to form a gas flow path for guiding compressed gas to a gas bearing.

Another object of the present invention is to provide a reciprocating compressor in which an outlet of a gas flow path is formed in a piston and an inlet of the gas flow path is formed in a cylinder to prevent the inlet or outlet of the gas flow path from communicating with a compression gas during a suction stroke of the piston and improve the performance of the compressor.

These and other advantages are achieved with the features of the claims.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a longitudinal cross-sectional view showing an example in which a conventional gas bearing is applied to a reciprocating compressor;
FIG. 2 is a perspective view showing an example in which conventional plate springs are applied to a reciprocating compressor;
FIG. 3 is a longitudinal cross-sectional view showing a reciprocating compressor according to the present invention;
FIG. 4 is an exploded perspective view showing a reciprocating motor in the reciprocating compressor of FIG. 3;
FIG. 5 is a half cross-sectional view showing an example of a stator in a reciprocating motor of FIG. 3;
FIG. 6 is a half cross-sectional view showing another embodiment of the stator in the reciprocating motor of FIG. 3;
FIG. 7 is a cross-sectional view showing an embodiment of a gas bearing in the reciprocating compressor of FIG. 3;
FIG. 8 is an exploded perspective view showing a gas guide member in the piston of FIG. 7;
FIG. 9 is a cross-sectional view taken along line "I-I" of FIG. 7;
FIG. 10 is a cross-sectional view taken along line "II-II" of FIG. 7;
FIG. 11 is a cross-sectional view enlarged showing portion "A" of FIG. 5;
FIG. 12 is a cross-sectional view showing an example in which a gas diffusion groove is formed in the gas guide member of FIG. 7;
FIG. 13 is a partial cross-sectional view for explaining resonant springs in the reciprocating compressor of FIG. 3; and
FIG. 14 is a top plan view for explaining the arrangement of the resonant springs of FIG. 13.

Hereinafter, a reciprocating compressor according to the present invention will be described in detail with reference to an embodiment illustrated in the accompanying drawings.

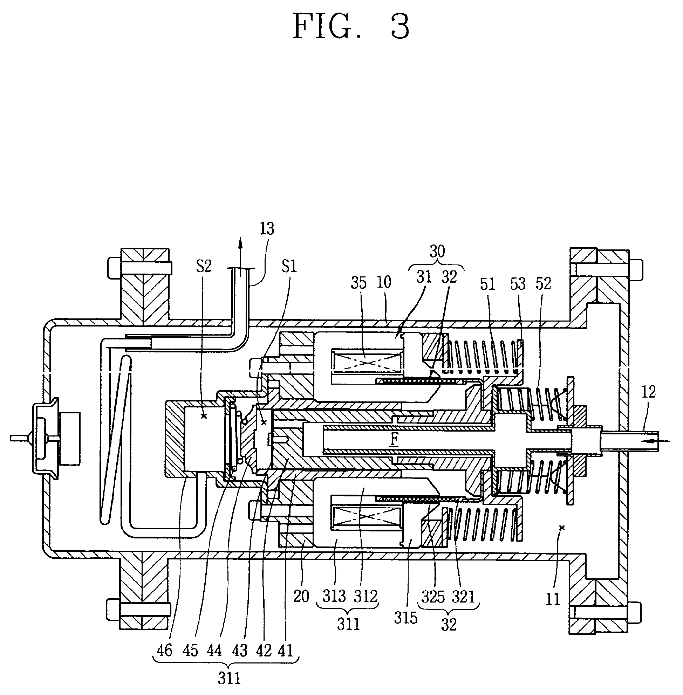

As shown in FIG. 3, in the reciprocating compressor according to this embodiment, a frame 20 is installed within a sealed casing 10, a reciprocating motor 30 and a cylinder 41 are fixed to the frame 20, a piston 42 coupled to a mover 32 of the reciprocating motor 30 is inserted into the cylinder 40 to reciprocate, and resonant springs 51 and 52 for inducing a resonating motion of the piston 42 are installed at both sides of the piston 42 in the motion direction of the piston 42.

In the aforementioned reciprocating compressor according this embodiment, when power is applied to a coil 35 of the reciprocating motor 30, the mover 32 of the reciprocating motor 30 reciprocates. Then, the piston 42 coupled to the mover 32 sucks and compresses a refrigerant gas while linearly reciprocating within the cylinder 41, and discharges it.

More specifically, when the piston 42 moves backwards, the refrigerant gas in the sealed casing 10 is sucked into the compression space S1 through the suction path F of the piston 42, and when the piston 42 moves forwards, the suction path F is closed and the refrigerant gas in the compression space S1 is compressed. Also, when the piston 42 further moves forwards, the discharge valve 44 is opened to discharge the refrigerant gas compressed in the compression space S1 and move it to the outside refrigeration cycle.

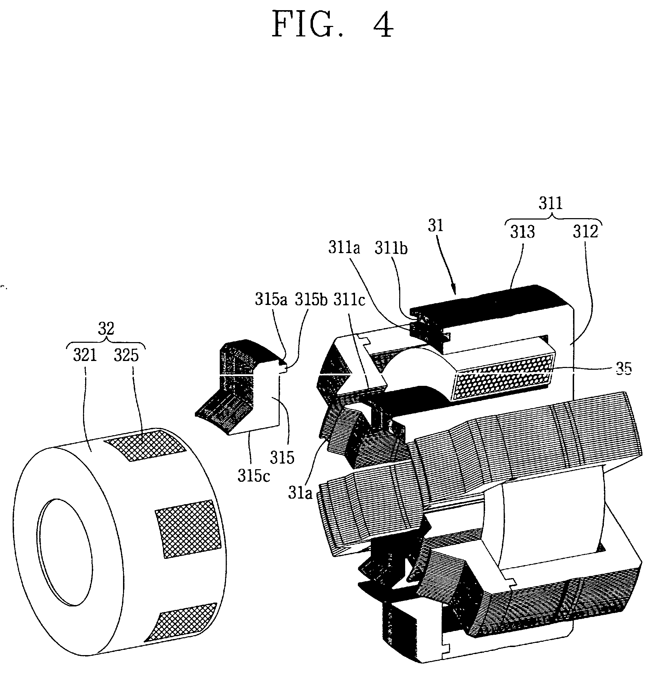

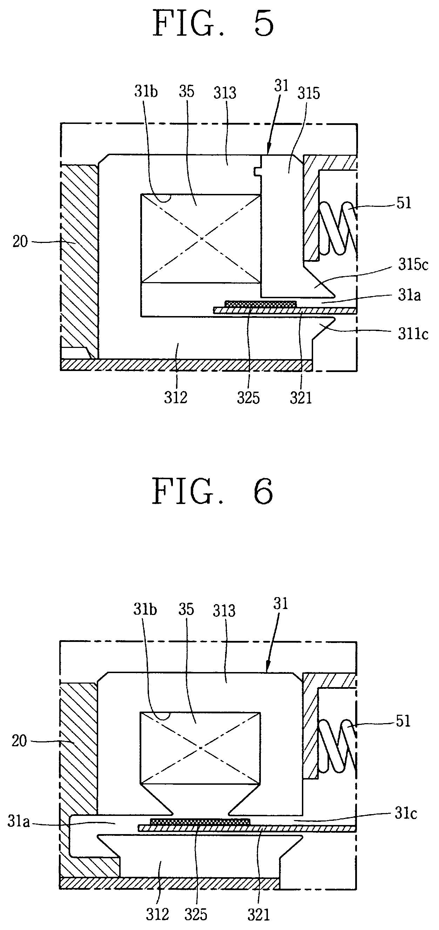

As shown in FIGS. 4 and 5, the reciprocating motor 30 comprises a stator 31 having a coil 35 and an air gap formed at only one side of the coil 35 and a mover 32 inserted into the air gap of the stator 31 and having a magnet 325 that linearly moves in the motion direction.

The stator 31 includes a plurality of stator blocks 311 and a plurality of pole blocks 315 respectively coupled to sides of the stator blocks 311 and forming an air gap portion 31 a along with the stator blocks 311.

The stator blocks 311 and the pole blocks 315 include a plurality of thin stator cores laminated sheet by sheet in a circular arc shape when axially projected.

The stator blocks 311 are formed in the shape of recesses when axially projected, and the pole blocks 315 are formed in a rectangular shape when axially projected.

The stator block (or each of the stator core sheets constituting the stator blocks) 311 may include a first magnetic path 312 positioned inside the mover 32 to form the inner stator and a second magnetic path 313 extending integrally from an axial side of the first magnetic path 312, i.e., the opposite end of the air portion 31 a, and positioned outside the mover 32 to form the outer stator.

While the first magnetic path 312 is formed in a rectangular shape, the second magnetic path 313 is formed in a stepwise manner and extends from the first magnetic path 312.

A coil receiving slot 31 b opened in an axial direction, i.e., the direction of the air gap portion, is formed on inner wall surfaces of the first and second magnetic paths 312 and 313, and the pole block 315 is coupled to an axial cross-section of the second magnetic path 313 which constitutes the coil receiving slot 31 b so as to open an axial open surface of the coil receiving slot 31 b.

Also, a coupling groove 311b and a coupling protrusion 315b may be formed on a coupling surface of the stator block 311 and a coupling surface of the pole block 315, which connect the stator block 311 and the pole block 315 to form a magnetic path connecting portion (not shown), to firmly couple the stator block 311 and the pole block 315 and maintain a given curvature. Although not shown, the stator block 311 and the pole block 315 may be coupled in a stepwise manner.

The coupling surface 311a of the stator block 311 and the coupling surface 315a of the pole block 315, except the coupling groove 311b and the coupling protrusion 315b, are formed to be flat, thereby preventing an air gap between the stator block 311 and the pole block 315. This prevents magnetic leakage between the stator block 311 and the pole block 315, thereby leading to an increase in motor performance.

A first pole portion 311c having an increasing cross-sectional area is formed at a distal end of the second magnetic path 313 of the stator block 311, i.e., a distal end of the air gap portion 31a, and a second pole portion 315c having an increasing cross-sectional area is formed at a distal end of the pole block 315, corresponding to the first pole portion 311 c of the stator block 311.

The mover 32 may include a magnet holder 321 having a cylindrical shape and a plurality of magnets 325 attached onto an outer circumferential surface of the magnet holder 321 in a circumferential direction to form a magnetic flux together with the coil 35.

The magnetic holder 321 may be formed of a non-magnetic substance in order to prevent flux leakage; however, it is not limited thereto. The outer circumferential surface of the magnetic holder 321 may be formed in a circular shape so that the magnets 325 are in line contact therewith and adhered thereto. Also, a magnet mounting groove (not shown) may be formed in a strip shape on the outer circumferential surface of the magnet holder 321 so as to insert the magnets 325 therein and support them in the motion direction.

The magnets 325 may be formed in a hexahedral shape and adhered one by one to the outer circumferential surface of the magnet holder 321. In the case of attaching the magnets 325 one by one, supporting members (not shown), such as fixing rings or a tape made up of a composite material.

Although the magnets 325 may be serially adhered in a circumferential direction to the outer circumferential surface of the magnet holder 321, it is preferable that the magnets 325 are adhered at predetermined intervals, i.e., between the stator blocks in a circumferential direction to the outer circumferential surface of the magnet holder 321 to minimize the use of the magnets, because the stator 31 comprises a plurality of stator blocks 311 and the plurality of stator blocks 311 are arranged at predetermined intervals in the circumferential direction. In this case, the magnets 325 are preferably formed to have a length corresponding to the air gap length of the magnetic holder 321, i.e., the circumferential length of the air gap.

Preferably, the magnet 325 may be configured such that its length in a motion direction is not shorter than a length of the air gap portion 31a in the motion direction, more particularly, longer than the length of the air gap portion 31a in the motion direction. At its initial position or during its operation, the magnet 325 may be disposed such that at least one end thereof is located inside the air gap portion 31 a, in order to ensure a stable reciprocating motion.

Moreover, though only one magnet 325 may be disposed in the motion direction, a plurality of magnets 325 may be disposed in the motion direction in some cases. In addition, the magnets may be disposed in the motion direction so that an N pole and an S pole correspond to each other.

Although the above-described reciprocating motor may be configured such that the stator has one air gap portion 314 as shown in FIG. 5, it may be configured such that in some cases the stator has air gap portions 31a and 31c on both sides of the coil in the reciprocating direction as shown in FIG. 6. In this case, too, the mover 32 may be formed in the same manner as the foregoing embodiment.

In the above-stated reciprocating compressor, it is required to reduce a frictional loss between the cylinder and the piston to improve the performance of the compressor. To this end, there has been conventionally known a gas bearing which lubricates between the cylinder and the piston by gas force by bypassing a part of compressed gas between an inner circumferential surface of the cylinder and an outer circumferential surface of the piston. In this case, gas flow paths with a small diameter may be formed in the cylinder, or a sintered porous material member may be provided on the inner circumferential surface of the cylinder.

As described above, in the case of forming gas flow paths with a small diameter in the cylinder, however, it is difficult to form the gas flow paths as fine pores, and impurities such as iron powder produced during the operation of the compressor may block the fine gas flow paths. Then, some of the gas flow paths are blocked and a gas force cannot be uniformly applied in a circumferential direction of the piston.

Moreover, in the case that a sintered porous material member is inserted into the inner circumferential surface of the cylinder, the porous material member may be abraded upon initial startup before the formation of the gas bearing because of high manufacturing cost of the porous material member and low abrasion resistance thereof, and therefore the lifespan of the porous material member may be degraded. Also, it is difficult to properly regulate the distribution of pores because of the characteristics of the porous material member, which can make it difficult to design the gas bearing so as to properly seal and lubricate a portion between the cylinder and the piston.

Further, in the case that the exits of the gas flow paths are formed in the cylinder, suction loss occurs as the outlets of the gas flow paths are exposed to the compression space during a suction stroke to thus cause a high-pressure refrigerant to enter the compression space. On the other hand, in the case that the inlets of the gas flow paths are formed in the piston, gas from the gas bearing flows backward to the compression space as the inlets of the gas flow paths are exposed to the compression space during a suction stroke.

Taking this into consideration, the gas bearing according to this embodiment allows a high-pressure compressed gas to be uniformly distributed between the cylinder and the piston, by forming gas flow paths in the cylinder and coupling a gas guide member having gas through holes to the outer circumferential surface of the piston to uniformly distribute and supply a high-pressure compressed gas guided through the gas flow paths between the cylinder and the piston.

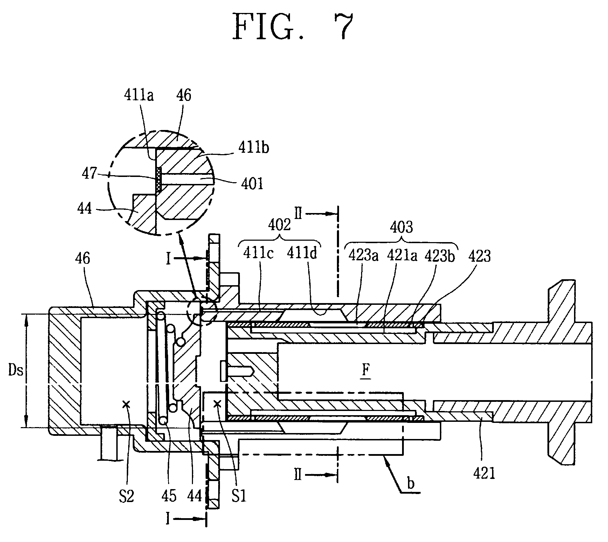

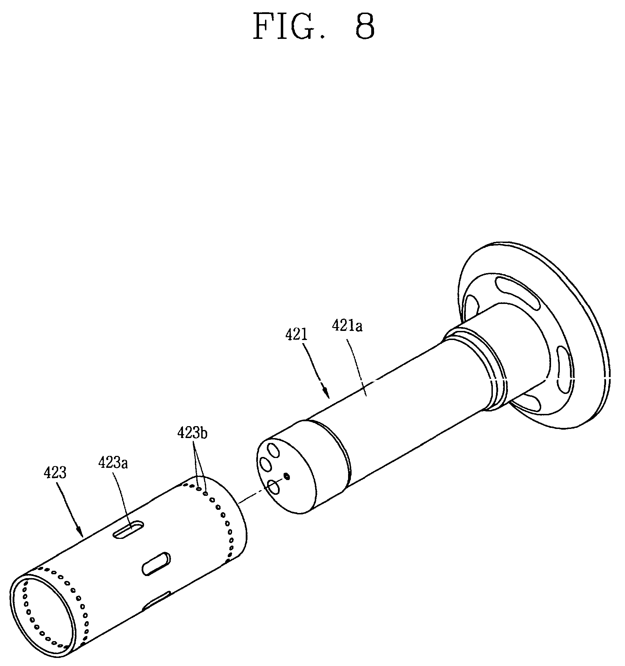

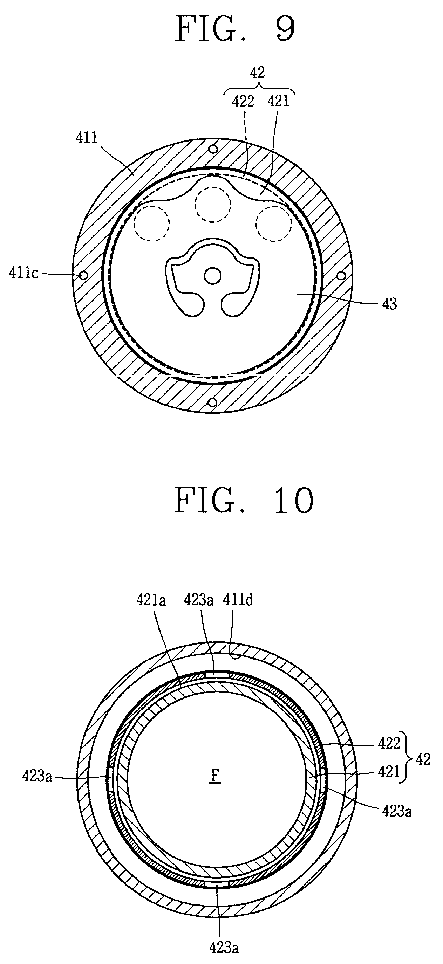

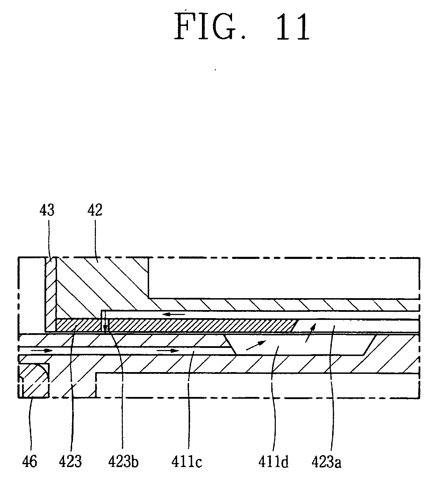

As shown in FIGS. 7 to 11, in the case that gas flow paths are formed in the piston 42, the gas flow paths are not exposed to the suction space even when the piston performs a suction stroke, thereby preventing a suction loss.

For example, the gas flow paths 401 may comprise a cylinder side gas flow path 402 formed at the cylinder 41 and a piston side gas flow path 403 communicating with the cylinder side gas flow path 402 and formed at the piston 42.

The cylinder side gas flow path 402 may comprises at least one gas inlet opening 411 c formed in a reciprocating direction of the piston 42 on a front end surface of the discharge side of the cylinder 41 and a gas pocket 411d formed on the inner circumferential surface of the cylinder 41, with its side wall surface communicating with the gas inlet opening 411c. The cross-sectional area of the gas pocket 411 d may be much greater than the cross-sectional area of the gas inlet opening 411c.

The piston side gas flow path 403 may comprise a gas communication opening 423a formed at a center portion of the gas guide member 423 and communicating with the gas pocket 411d of the cylinder 41, a gas guide groove 421a formed on the outer circumferential surface of the piston body 421 and communicating with the gas communication opening 423a, and a plurality of bearing holes 423b formed on both end portions of the gas guide member 423 so as to supply gas guided through the gas guide groove 421a between the cylinder 41 and the piston 42.

The gas guide groove 421 a has an annular shape. Preferably, the gas guide groove 421a has a width in the reciprocating direction much larger than the width of the gas communication opening 423a in the reciprocating direction so that gas introduced into the gas guide groove 421 a is uniformly distributed over the entire bearing surface, that is, the length of the gas guide groove 421 a is as similar to the width of the gas guide member 423 in the reciprocating direction as possible to increase the baring surface area as much as possible.

Preferably, the bearing holes 423b have a significantly smaller size than the gas communication opening 423a to prevent excessive exposure of compressed gas.

An annular filter 47 may be installed on the front end of the gas inlet opening, i.e., the front end surface 411 a of the cylinder body 411 so as to prevent impurities from entering the cylinder side gas flow path 402.

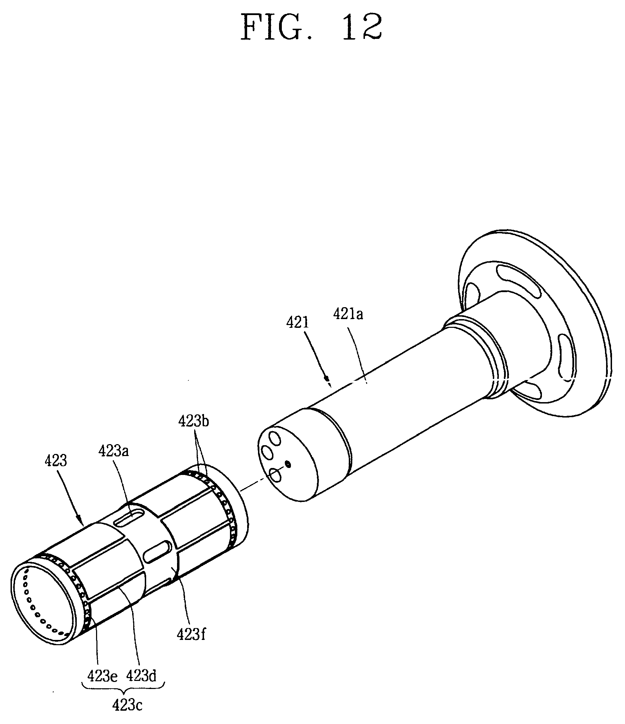

Preferably, at least one gas diffusion groove 423c may be further formed on an outer circumferential surface of the gas guide member 423 because a high-pressure compressed gas may be uniformly distributed over a bearing area between the cylinder 41 and the piston 42, as shown in FIG. 12.

The gas diffusion groove 423c may comprise a linear groove 423d communicating with the gas communication opening 423a and an annular groove 423e communicating with the linear groove 423d and formed in an annular shape.

Preferably, the gas diffusion groove 423c is formed to communicate with the gas communication opening 423a or the bearing holes 423b so that the compressed gas entering or introduced into the gas guide groove 421 a quickly enters the gas diffusion groove 423c. In the drawings, unexplained reference numeral 423f denotes a middle guide groove.

As described above, in the case that the gas guide member 423 is formed in a cylindrical shape and inserted and coupled to the piston body, a part of compressed gas discharged to the discharge space S2 of the discharge cover 46 enters the gas pocket 411d through the gas inlet opening 411c, and this compressed gas enters the gas guide groove 421 a through the gas communication opening 423a of the gas guide member 423 and diffused in the gas guide groove 421 a, thereby supplying the compressed gas between the cylinder 41 and the piston 42 through the bearing holes 423b of the gas guide member 423.

Because the bearing holes 423b, which are the outlets of the gas flow paths, are formed in the piston 42, the outlets of the gas flow paths are not exposed to the compression space S1 during a suction stroke of the piston 42, thereby preventing a degradation in the performance of the compressor caused by a suction loss.

Also, in the case that a gas inlet opening is formed in the piston 42, the gas inlet opening has to communicate with the compression space. Thus, it is necessary to install a check valve to prevent a refrigerant sucked into the compression space from leaking into the gas inlet opening when the piston performs a suction stroke, and this may increase manufacturing costs. Nevertheless, this embodiment allows a reduction in manufacturing costs because the gas inlet opening is formed at the cylinder side and makes the process easier.

Moreover, the gas guide member 423 has a simple cylindrical shape, and hence the manufacturing costs can be reduced, compared to the porous material member.

The above-described reciprocating compressor with the gas bearing according to this embodiment is devised to reduce material costs and the number of assembly processes by using not plate springs but coil springs as the resonant springs, and avoiding the use of a connecting bar or link.

In this embodiment, the above-described reciprocating compressor with the gas bearing according to this embodiment is devised to reduce material costs and the number of assembly processes by using not plate springs but coil springs as the resonant springs, and avoiding the use of a connecting bar or link.

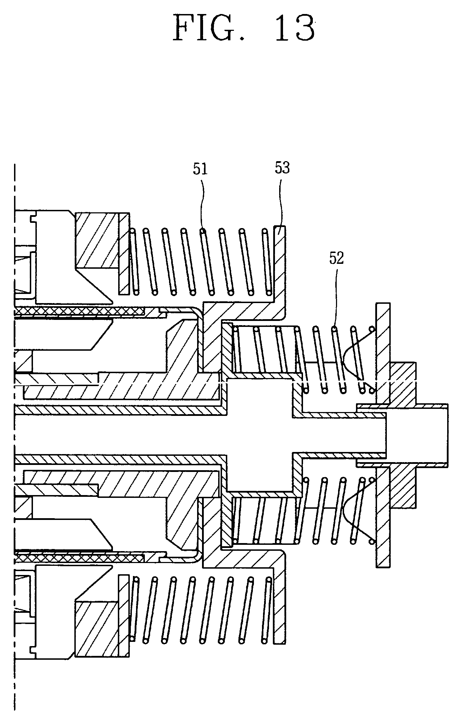

As shown in FIG. 13, the resonant springs may comprise a first resonant spring and a second resonant spring 52 which are respectively provided on both front and back sides of a spring supporter 53 coupled to the mover 32 and the piston 42.

The first resonant spring 51 and the second resonant spring 52 each are provided in plural and arranged in a circumferential direction. However, either the first resonant spring 51 or the second resonant spring 52 may be provided in plural, and the other resonant spring may be provided in singular.

If the first resonant spring 51 and the second resonant spring 52 are compressed coil springs as described above, a side force may be produced when the resonant springs 51 and 52 are expanded. Accordingly, the resonant springs 51 and 52 may be arranged so as to offset a side force or torsion moment of the resonant springs 51 and 52.

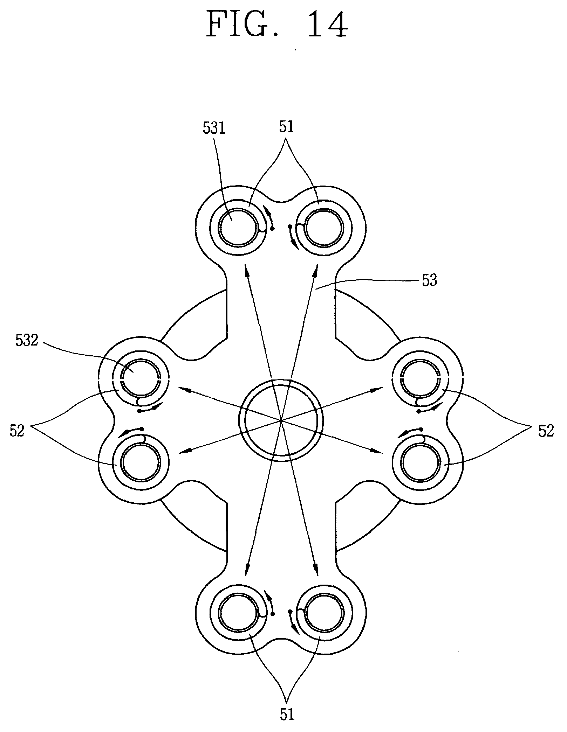

For example, as shown in FIG. 14, in the case that the first resonant spring 51 and the second resonant spring 52 are arranged alternately by twos in a circumferential direction, distal ends of the first and second resonant springs 51 and 52 are wound at the same position in opposite directions(counterclockwise) relative to the center of the piston 42, and the resonant springs on the same side positioned in their respective diagonal directions are arranged to symmetrically engage each other so that a side force and a torsion moment are produced in opposite directions.

Also, the first resonant spring 51 and the second resonant spring 52 may be arranged to symmetrically engage the distal ends of the resonant springs with each other so that a side force and a torsion moment are produced in opposite directions along the circumferential direction.

Although not shown, if the number of first resonant springs 51 is odd, they are arranged so that lines orthogonal to the front end surfaces of the springs meet at one point to thus offset a side force and a torsion moment.

Preferably, spring fixing protrusions 531 and 532 are respectively formed on a frame or spring supporter 53 to which the ends of the first and second resonant springs 51 and 52 are fixed, in order for the resonant springs 51 and 52 to be forcibly fit and fixed to the spring fixing protrusions 53, because the engaging resonant springs are prevented from turning.

The number of first resonant springs 51 may be equal to or different from the number of second resonant springs 52 as long as the first resonant spring 51 and the second resonant spring 52 have the same elasticity.

In the case of using compression coil springs as the resonant springs 51 and 52, as described above, a side force and a torsion moment may be produced when expanded because of the characteristics of the compression coil springs, and therefore the forward movement of the piston 42 may be distorted. In this embodiment, however, the plurality of first resonant springs 51 and second resonant springs 52 are arranged to be wound in opposite directions, and therefore the side force and torsion moment produced from the resonant springs 51 and 52 are offset by the diagonally corresponding resonant springs. Accordingly, the forward movement of the piston 42 can be maintained, and abrasion of surfaces contacting the resonant springs 51 and 52 can be prevented. Moreover, the compressor can be installed in a standing type, as well as in a lateral type because compression coil springs, which have a small longitudinal placement, are used as the resonant springs 51 and 52. The manufacturing costs and the number of assembly processes can be reduced because no connecting bar or link is required.

Although the foregoing embodiments have been described with respect to the case where the cylinder is inserted into the stator of the reciprocating motor, the resonant springs may be used in the same manner as above even when the reciprocating motor is mechanically coupled to a compression unit comprising the cylinder with a predetermined interval therefrom. A detailed description of which will be omitted.

Further, in the foregoing embodiments, the piston is configured to reciprocate and the resonant springs are respectively provided on both sides of the piston in the motion direction. In some cases, however, the cylinder may be configured to reciprocate and the resonant springs may be provided on both sides of the cylinder. In this case, too, the resonant springs may be formed as a plurality of compression coil springs, as in the foregoing embodiments, and the plurality of compression coil springs may be arranged in the same manner as the foregoing embodiments. A detailed description of which will be omitted.

## Claims

1. A reciprocating compressor comprising:
a cylinder (41) having a compression space S1;
a piston (42) inserted into the compression space and reciprocating relative to the cylinder;
a discharge valve (44) configured to be attachable to and detachable from a front end surface of the cylinder and selectively opening and closing the compression space of the cylinder; and
a discharge cover (46) having a discharge space (S2) to selectively communicate with the compression space,
wherein the cylinder has a cylinder side gas flow path (402) for guiding refrigerant discharged to the discharge space to an inner circumferential surface of the cylinder **characterized in that**
the piston has a piston side gas flow path (403) communicating with the cylinder side gas flow path to distribute and supply the refrigerant guided through the cylinder side gas flow path between the cylinder and the piston,
wherein the piston side gas flow path comprises:
a gas communication opening (423a) formed on an outer circumferential surface of the piston to correspond to the cylinder side gas flow path;
a gas guide groove (421a) formed in an annular shape to communicate with the gas communication opening; and
a bearing hole (423b) communicating with the gas guide groove and penetrated from at least one side of the gas communication opening toward a bearing surface of the cylinder and the piston.

2. The reciprocating compressor of claim 1, wherein the cylinder side gas flow path comprises:
at least one gas inlet opening (411 c) formed in a reciprocating direction of the piston on a front end surface of the cylinder; and
a gas pocket (411 d) formed in an annular shape on the inner circumferential surface of the cylinder to communicate with the gas inlet opening.

3. The reciprocating compressor of claim 2, wherein an inlet of the gas inlet opening is formed at a greater distance than the radius of the discharge valve relative to the center of the discharge valve.

4. The reciprocating compressor of any one of claims 1 to 3, wherein the width of the gas guide groove is greater than the width of the gas communication opening with respect to the reciprocating direction of the piston.

5. The reciprocating compressor of any one of claims 1 to 3, wherein at least one gas communication opening and at least one bearing hole are respectively formed along a circumferential direction, and
the bearing hole has a smaller size than the gas communication opening.

6. The reciprocating compressor of any one of claims 1 to 5, wherein the piston comprises:
a piston body (421); and
a gas guide member (423) inserted and coupled to an outer circumferential surface of the piston body at a predetermined interval therefrom so as to form the gas guide groove,
wherein the gas communication opening and the bearing hole are formed in the gas guide member.

7. The reciprocating compressor of claim 6, wherein a gas diffusion groove having a larger surface area than the surface area of the bearing hole is further formed on an outer circumferential surface of the gas guide member.

8. The reciprocating compressor of claim 6 or 7, wherein the gas diffusion groove communicates with at least either one of the gas communication opening and the bearing hole.

9. The reciprocating compressor of claims 6 or 7, wherein the gas diffusion groove (423c) comprises:
a linear groove (423d) communicating with the gas communication opening (423a); and
an annular groove (423e) communicating with the linear groove (423d) and formed in an annular shape.

10. The reciprocating compressor of any one of claims 1 to 9, wherein either the cylinder or the piston is coupled to a reciprocating mover (32) of a reciprocating motor (30),
the mover is elastically supported by resonant springs (51)(52), and
the resonant springs are formed as compression coil springs and respectively provided on both front and back sides of the mover in the reciprocating direction.

## Patentansprüche

1. Kolbenkompressor, der aufweist:
einen Zylinder (41) mit einem Kompressionsraum (S1);
einen Kolben (42), der in den Kompressionsraum eingefügt ist und sich relativ zum Zylinder hin- und herbewegt;
ein Abgabeventil (44), das so konfiguriert ist, dass es an einer vorderen Endfläche des Zylinders befestigbar und davon abnehmbar ist, und den Kompressionsraum des Zylinders selektiv öffnet und schließt; und
eine Abgabeabdeckung (46) mit einem Abgaberaum (S2), um mit dem Kompressionsraum selektiv zu kommunizieren,
wobei der Zylinder einen zylinderseitigen Gasströmungsweg (402) zum Führen von Kältemittel, das zum Abgaberaum abgegeben wird, zu einer Innenumfangsfläche des Zylinders hat, **dadurch gekennzeichnet, dass**
der Kolben einen kolbenseitigen Gasströmungsweg (403) hat, der mit dem zylinderseitigen Gasströmungsweg kommuniziert, um das durch den zylinderseitigen Gasströmungsweg geführte Kältemittel zwischen dem Zylinder und dem Kolben zu verteilen und zuzuführen,
wobei der kolbenseitige Gasströmungsweg aufweist:
eine Gaskommunikationsöffnung (423a), die auf einer Außenumfangsfläche des Kolbens gebildet ist, um dem zylinderseitigen Gasströmungsweg zu entsprechen;
eine Gasführungsnut (421a), die in Ringform gebildet ist, um mit der Gaskommunikationsöffnung zu kommunizieren; und
ein Lagerloch (423b), das mit der Gasführungsnut kommuniziert und von mindestens einer Seite der Gaskommunikationsöffnung zu einer Lagerfläche des Zylinders und des Kolbens durchgeht.

2. Kolbenkompressor nach Anspruch 1, wobei der zylinderseitige Gasströmungsweg aufweist:
mindestens eine Gaseinlassöffnung (411 c), die in Hin- und Herbewegungsrichtung des Kolbens auf einer vorderen Endfläche des Zylinders gebildet ist; und
eine Gastasche (411d), die in Ringform auf der Innenumfangsfläche des Zylinders gebildet ist, um mit der Gaseinlassöffnung zu kommunizieren.

3. Kolbenkompressor nach Anspruch 2, wobei ein Einlass der Gaseinlassöffnung in einem größeren Abstand als der Radius des Abgabeventils relativ zur Mitte des Abgabeventils gebildet ist.

4. Kolbenkompressor nach einem der Ansprüche 1 bis 3, wobei die Breite der Gasführungsnut größer als die Breite der Gaskommunikationsöffnung im Hinblick auf die Hin- und Herbewegungsrichtung des Kolbens ist.

5. Kolbenkompressor nach einem der Ansprüche 1 bis 3, wobei mindestens eine Gaskommunikationsöffnung und mindestens ein Lagerloch jeweils in Umfangsrichtung gebildet sind, und
das Lagerloch eine kleinere Größe als die Gaskommunikationsöffnung hat.

6. Kolbenkompressor nach einem der Ansprüche 1 bis 5, wobei der Kolben aufweist:
einen Kolbenkörper (421); und
ein Gasführungsteil (423), das eingeführt und mit einer Außenumfangsfläche des Kolbenkörpers in einem vorbestimmten Abstand davon gekoppelt ist, um so die Gasführungsnut zu bilden,
wobei die Gaskommunikationsöffnung und das Lagerloch im Gasführungsteil gebildet sind.

7. Kolbenkompressor nach Anspruch 6, wobei eine Gasdiffusionsnut mit einer größeren Oberfläche als die Oberfläche des Lagerlochs ferner auf einer Außenumfangsfläche des Gasführungsteils gebildet ist.

8. Kolbenkompressor nach Anspruch 6 oder 7, wobei die Gasdiffusionsnut mit der Gaskommunikationsöffnung und/oder dem Lagerloch kommuniziert.

9. Kolbenkompressor nach Anspruch 6 oder 7, wobei die Gasdiffusionsnut (423c) aufweist:
eine Linearnut (423d), die mit der Gaskommunikationsöffnung (423a) kommuniziert; und
eine Ringnut (423e), die mit der Linearnut (423d) kommuniziert und in Ringform gebildet ist.

10. Kolbenkompressor nach einem der Ansprüche 1 bis 9, wobei der Zylinder oder der Kolben mit einem hin und her beweglichen Bewegungselement (32) eines hin und her beweglichen Motors (30) gekoppelt ist,
das Bewegungselement durch Schwingfedern (51, 52) gestützt wird, und
die Schwingfedern als Schraubendruckfedern gebildet und jeweils auf einer Vorderund einer Rückseite des Bewegungselements in Hin- und Herbewegungsrichtung vorgesehen sind.

## Revendications

1. Compresseur à mouvement alternatif comprenant :
un cylindre (41) présentant un espace de compression S1;
un piston (42) inséré dans l'espace de compression et effectuant un mouvement de va-et-vient relativement au cylindre ;
une soupape de décharge (44) configurée pour pouvoir être fixée et détachée d'une surface d'extrémité avant du cylindre et ouvrant et fermant sélectivement l'espace de compression du cylindre ; et
un couvercle de décharge (46) présentant un espace de décharge (S2) pour communiquer sélectivement avec l'espace de compression,
dans lequel le cylindre présente un chemin d'écoulement de gaz côté cylindre (402) pour guider le réfrigérant déchargé dans l'espace de décharge vers une surface circonférentielle intérieure du cylindre, **caractérisé en ce que**
le piston présente un chemin d'écoulement de gaz côté piston (403) communiquant avec le chemin d'écoulement de gaz côté cylindre pour distribuer et fournir le réfrigérant guidé à travers le chemin d'écoulement de gaz côté cylindre entre le cylindre et le piston,
dans lequel le chemin d'écoulement de gaz côté piston comprend :
une ouverture de communication de gaz (423a) formée sur une surface circonférentielle extérieure du piston pour correspondre au chemin d'écoulement de gaz côté cylindre ;
une cannelure de guidage de gaz (421a) formée sous une forme annulaire pour communiquer avec l'ouverture de communication de gaz ; et
un trou de support (423b) communiquant avec la cannelure de guidage de gaz et étant pénétré depuis au moins un côté de l'ouverture de communication de gaz vers une surface de support du cylindre et du piston.

2. Compresseur à mouvement alternatif selon la revendication 1, dans lequel le chemin d'écoulement de gaz côté cylindre comprend :
au moins une ouverture d'entrée de gaz (411c) formée dans une direction de va-et-vient du piston sur une surface d'extrémité avant du cylindre ; et
une poche de gaz (411d) formée sous une forme annulaire sur la surface circonférentielle intérieure du cylindre pour communiquer avec l'ouverture d'entrée de gaz.

3. Compresseur à mouvement alternatif selon la revendication 2, dans lequel une entrée de l'ouverture d'entrée de gaz est formée à une distance supérieure au rayon de la soupape de décharge relativement au centre de la soupape de décharge.

4. Compresseur à mouvement alternatif selon l'une quelconque des revendications 1 à 3, dans lequel la largeur de la cannelure de guidage de gaz est supérieure à la largeur de l'ouverture de communication de gaz par rapport à la direction de va-et-vient du piston.

5. Compresseur à mouvement alternatif selon l'une quelconque des revendications 1 à 3, dans lequel au moins une ouverture de communication de gaz et au moins un trou de support sont respectivement formés le long d'une direction circonférentielle et
le trou de support présente une taille inférieure à l'ouverture de communication de gaz.

6. Compresseur à mouvement alternatif selon l'une quelconque des revendications 1 à 5, dans lequel le piston comprend :
un corps de piston (421) ; et
un élément de guidage de gaz (423) inséré et couplé à une surface circonférentielle extérieure du corps de piston à un intervalle prédéterminé depuis celle-ci, de façon à former la cannelure de guidage de gaz,
dans lequel l'ouverture de communication de gaz et le trou de support sont formés dans l'élément de guidage de gaz.

7. Compresseur à mouvement alternatif selon la revendication 6, dans lequel une cannelure de diffusion de gaz présentant une superficie supérieure à la superficie du trou de support est en outre formée sur une surface circonférentielle extérieure de l'élément de guidage de gaz.

8. Compresseur à mouvement alternatif selon la revendication 6 ou 7, dans lequel la cannelure de diffusion de gaz communique avec au moins l'un ou l'autre parmi l'ouverture de communication de gaz et le trou de support.

9. Compresseur à mouvement alternatif selon les revendications 6 ou 7, dans lequel la cannelure de diffusion de gaz (423c) comprend :
une cannelure linéaire (423d) communiquant avec l'ouverture de communication de gaz (423a) ; et
une cannelure annulaire (423e) communiquant avec la cannelure linéaire (423d) et formée sous une forme annulaire.

10. Compresseur à mouvement alternatif selon l'une quelconque des revendications 1 à 9, dans lequel le cylindre ou le piston est couplé à un système de déplacement à mouvement alternatif (32) d'un moteur alternatif (30),
le système de déplacement est élastiquement supporté par des ressorts résonants (51) (52), et
les ressorts résonants sont formés comme des ressorts hélicoïdaux de compression et respectivement ménagés sur les côtés avant et arrière du système de déplacement, dans la direction de mouvement de va-et-vient.
